# EUROPEAN PATENT APPLICATION

(11) **EP 4 667 337 A1**
(43) Date of publication of application: **24.12.2025**
(21) Application number: 25183039.4
(22) Date of filing: 16.06.2025
(51) Int. Cl.: B62K 3/02, B62K 5/08, B62K 5/10, B62M 6/55, B62K 5/06, B62K 5/05, B62K 19/34

(54) **LEAN VEHICLE**

(30) Priority: 17.06.2024 JP 2024097151
(71) Applicant: Kawasaki Motors, Ltd., Akashi, Hyogo 673-8666 (JP)
(72) Inventor: UEDA, Kazuki, Akashi-shi, 6738666 (JP); KAWAKAMI, Kohei, Akashi-shi, 6738666 (JP)
(74) Representative: Wenzel Nemetzade Warthmüller Patentanwälte Part mbB

(57) **Abstract**

A lean vehicle 1 includes a front wheel 3, a rear wheel 4, a motor 15c, and a front lower frame 33. The motor 15c is disposed rearward of the front wheel 3 and forward of the rear wheel 4, and generates power for traveling. The front lower frame 33 supports the front wheel 4 at front end thereof and the motor 15c at rear end thereof, with the rear end positioned higher than the front end and the rear end positioned higher than the lower end of the motor 15c.

## Description

### [Technical field]

The present application primarily relates to a lean vehicle equipped with a motor that generates power for running.

### [Background art]

Patent Document 1 is Japanese Patent Application Laid-Open No. 2022-026352.

Patent Document 1 discloses a three-wheeled bicycle. The three-wheeled bicycle includes two front wheels, a rear wheel, a motor, and a down tube. The motor is an in-wheel motor provided on an axle of the rear wheel. The down tube is a straight frame that is horizontally mounted at a relatively low position. A front end of the down tube supports the front wheel via a lean mechanism or the like.

### [Summary of the Invention]

Motors provided on bicycles are not limited to the in-wheel motors such as those disclosed in Patent Document 1; center motors provided between the front and rear wheels are also known. When the center motor is attached to the down tube as in Patent Document 1, the position of the center motor is lowered, and the distance from a road surface to the motor becomes shorter. This makes it easier for obstacles protruding above the road surface to come into contact with the motor. In particular, in a lean vehicle in which a body is inclined relative to the road surface, the road surface and the motor tend to come close to each other when the vehicle is leaning, making it easier for the motor to come into contact with obstacles on the road surface.

The present application has been made in consideration of the above circumstances, and its main object is to provide a lean vehicle in which a center motor is less likely to come into contact with obstacles protruding above a road surface.

### [Means for solving the problem]

The problem to be solved by the present application is as described above. Next, the means for solving this problem and the effects thereof will be described.

According to a first aspect of the present application, there is provided a lean vehicle having the following configuration. That is, the lean vehicle includes a front wheel, a rear wheel, a motor, and a front lower frame. The motor is disposed behind the front wheel and forward of the rear wheel, and generates power for traveling. The front lower frame supports the front wheel at its front end and supports the motor at its rear end, with the rear end being positioned higher than the front end and the rear end being positioned higher than the lower end of the motor.

According to a second aspect of the present application, there is provided a lean vehicle having the following configuration. That is, the lean vehicle includes a left front wheel, a right front wheel, a rear wheel, a front lower frame, a parallel link mechanism, a seat tube, and a seat side reinforcing frame. The front lower frame supports the front wheel at a front end portion. The parallel link mechanism is disposed between the left front wheel and the right front wheel, and includes an arm that inclines together with the left front wheel and the right front wheel when leaning. A seat post connected to a seat on which a rider sits is inserted into the seat tube. The seat side reinforcing frame has a front end connected to the front lower frame and a rear end connected to the seat tube, and is inclined or curved so that the front end is lower than the rear end.

### [Effect of the Invention]

According to the present application, a lean vehicle can be provided in which a motor is less likely to come into contact with obstacles protruding above a road surface.

### [Brief description of the drawings]

FIG. 1 is a side view of a lean vehicle according to an embodiment of the present application.
FIG. 2 is a front view of a lean vehicle in an upright state.
FIG. 3 is a front view of a lean vehicle in a lean state.
FIG. 4 is a side view of a body frame.
FIG. 5 is a perspective view of a vicinity of a motor.

### [Embodiment of invention]

Next, an embodiment of the present application will be described with reference to the drawings. In the following description, the left and right directions of the lean vehicle 1 are defined as directions seen by a driver riding in the lean vehicle 1. Therefore, a front-rear direction corresponds to a vehicle length direction, and a left-right direction corresponds to a vehicle width direction. A vertical direction and an up-down direction corresponds to a height direction.

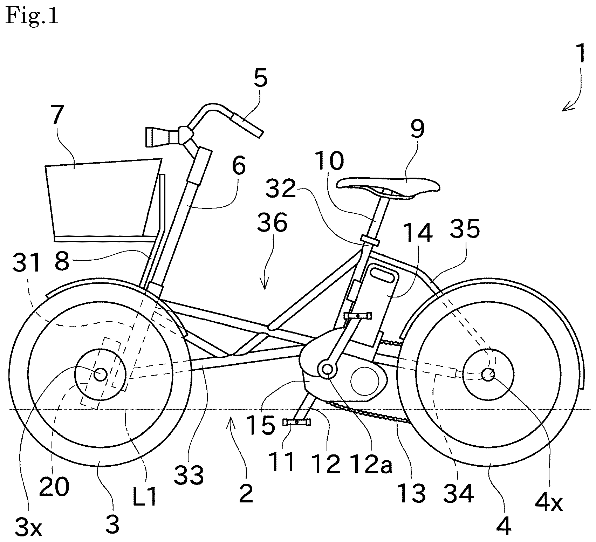

The lean vehicle 1 shown in FIG. 1 is a lean vehicle that inclines with respect to a road surface when turning or the like. The lean vehicle 1 is a vehicle on which a driver straddles (a straddle vehicle). The lean vehicle 1 runs using a force applied by the driver to pedals and a force generated by a motor. In particular, since the lean vehicle 1 of this embodiment is an electrically assisted bicycle, the motor generates power on the condition that the driver applies a pedaling force to the pedals. The lean vehicle 1 is not limited to the electrically assisted bicycle. That is, when the driver is not applying force to the pedal, the motor may generate power to run the lean vehicle 1. In this case, the driver who commands the motor to generate power may be a push button, a lever, or a throttle grip.

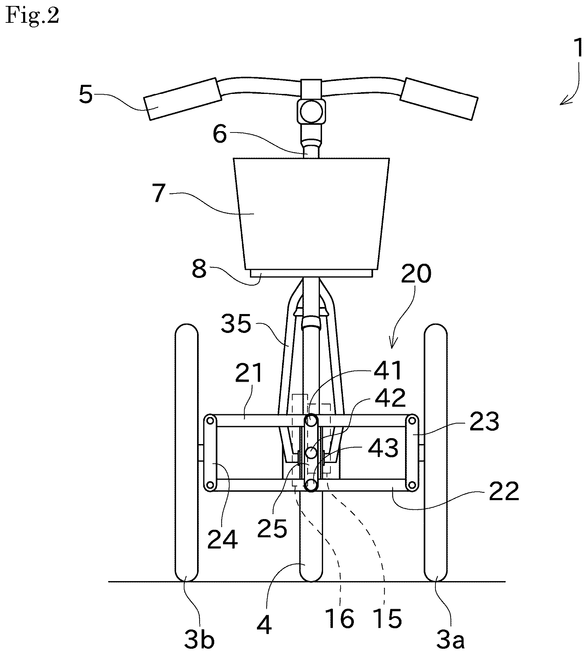

As shown in FIGS. 1 and 2, the lean vehicle 1 includes a vehicle body frame 2, a left front wheel 3a, a right front wheel 3b, and a rear wheel 4.

The vehicle body frame 2 is a structural member that forms the framework of the lean vehicle 1. Various components of the lean vehicle 1 are attached to the vehicle body frame 2. The vehicle body frame 2 is constructed by combining a plurality of frames in order to ensure the necessary rigidity. The vehicle body frame 2 will be described in detail later.

The left front wheel 3a, the right front wheel 3b, and the rear wheel 4 each include a wheel body and a tire attached to the wheel body. The front wheel 3 is supported by a front axle 3x and is rotatable around the front axle 3x. The rear wheel 4 is supported by a rear axle 4x and is rotatable about the rear axle 4x. The left front wheel 3a and the right front wheel 3b each correspond to a "front wheel". Hereinafter, the left front wheel 3a and the right front wheel 3b may be collectively referred to as the front wheels 3. The lean vehicle 1 of this embodiment is a three-wheeled bicycle having two front wheels and one rear wheel. Alternatively, the lean vehicle 1 may be a three-wheeled bicycle with one front wheel and two rear wheels. The total number of front and rear wheels provided on the lean vehicle 1 is not limited to three, but may be two or four or more.

The left front wheel 3a is disposed on the left side of the center position of the vehicle width. The right front wheel 3b is disposed on the right side of the center position of the vehicle width. The left front wheel 3a and the right front wheel 3b are supported by the vehicle body frame 2 via a parallel link mechanism 20.

As shown in FIG. 2, the parallel link mechanism 20 includes an upper arm 21, a lower arm 22, a left arm 23, a right arm 24, and a central arm 25. The arms constituting the parallel link mechanism 20 are connected to form a square. The connected arms are capable of relative rotation at their respective connection positions. The upper arm 21 and the lower arm 22 are disposed vertically side by side. The left arm 23 and the right arm 24 are disposed side by side. The central arm 25 connects the central portion of the upper arm 21 and the central portion of the lower arm 22. FIG. 1 also illustrates an imaginary line L1 which indicates the height of the lower end of the parallel link mechanism 20 (in other words, the lower end of the lower arm 22). As shown in FIG. 1, the lower arm 22 is disposed below the front axle 3x. This makes it easier to protect a motor case 15 located behind the lower arm 22. In this embodiment, the lower end of the lower arm 22 is located lower than the lower end of a motor 15c. This makes it easier for the motor 15c to be protected by the lower arm 22. As described above, it is preferable that the lower arm 22 be disposed below the motor case 15 and the sprocket case 16.

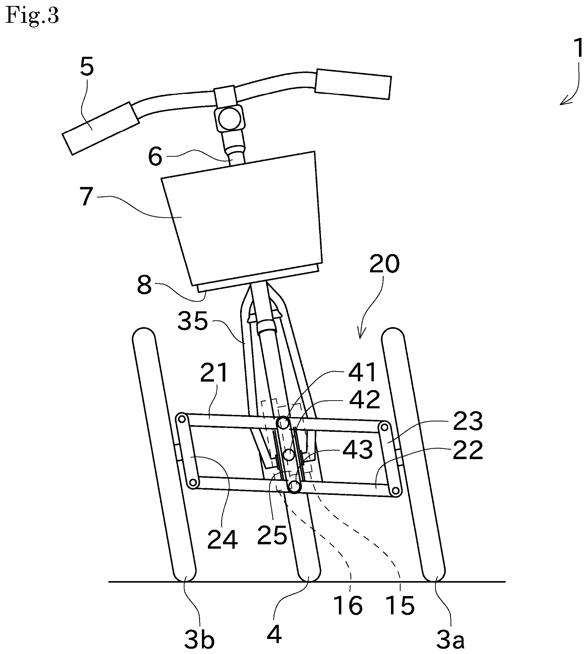

As shown in FIG. 2, when the lean vehicle 1 is upright on a horizontal plane, the longitudinal directions of the upper arm 21 and the lower arm 22 are parallel to the horizontal plane. When the lean vehicle 1 is upright on a horizontal surface, the longitudinal directions of the left arm 23 and the right arm 24 are parallel to the up-down direction. Therefore, the parallel link mechanism 20 has a rectangular shape. On the other hand, as shown in FIG. 3, when the lean vehicle 1 is leaned on the horizontal plane, the longitudinal directions of the upper arm 21 and the lower arm 22 are substantially parallel to the horizontal plane. If the height of the connection position between the left front wheel 3a and the left arm 23 is different from the height of the connection position between the right front wheel 3b and the right arm 24, the longitudinal directions of the upper arm 21 and the lower arm 22 may be inclined from the horizontal plane accordingly. When the lean vehicle 1 is leaned on the horizontal plane, the longitudinal directions of the left arm 23 and the right arm 24 are inclined with respect to the up-down direction. In other words, the longitudinal direction of the left arm 23 and the right arm 24 is parallel to the longitudinal direction of the left front wheel 3a and the right front wheel 3b when viewed from the front. The longitudinal direction of the left arm 23 and the right arm 24 is parallel to the longitudinal direction of the central arm 25. By using the parallel link mechanism 20, the left front wheel 3a and the right front wheel 3b can each be inclined relative to the road surface, while the vehicle body frame 2 can be tilted relative to the road surface. In this embodiment, the front wheels 3 are provided on the left and right, so that the cornering stability in a lean state can be improved compared to a vehicle with only one front wheel 3.

The front wheels 3 are steerable wheels, and the steering angle of the front wheels 3 changes in response to the driver's steering operation. The lean vehicle 1 is equipped with a steering wheel 5 for steering. A steering shaft 6 is connected to the steering handle 5. The steering shaft 6 is a straight member having a circular cross section. The steering shaft 6 is attached to the vehicle body frame 2. The steering handle 5 is rotatable integrally with the steering shaft 6 around the central axis of the steering shaft 6. The operation of the driver turning the steering handle 5 is the steering operation. When the steering shaft 6 rotates, the steering mechanism operates to change the steering angle of the front wheels 3.

A basket 7 is disposed in front of the steering shaft 6 and above the parallel link mechanism 20. The basket 7 is a storage member for storing luggage. The basket 7 is connected to the vehicle body frame 2 via a basket arm 8. The position of the basket 7 is not limited to being in front of the steering shaft 6 and above the parallel link mechanism 20. For example, the basket 7 may be disposed between the front wheel 3 and the rear wheel 4 in the front-rear direction. The basket 7 may be disposed so that the basket 7 and the front wheel 3 overlap in the height direction. The basket 7 is not an essential component and can be omitted.

A seat 9 for a driver to sit on is provided behind the steering handle 5. The seat 9 is connected to a seat post 10. The seat post 10 is a straight member having a circular cross section. The seat post 10 is attached to the vehicle body frame 2. The seat post 10 is disposed at an angle such that its upper end is located further rearward than its lower end.

Pedals 11 are provided below the seat 9. The pedals 11 are disposed in a pair on the left and right. The driver sits in the seat 9, grips the steering handle 5 with his/her hands to steer, and drives the lean vehicle 1 by pedaling the pedals 11 with his/her feet.

A crank 12 is connected to the pedal 11. The crank 12 is rotatable about a crankshaft 12a. The rotational force generated by pedaling the pedals 11 and rotating the crank 12 is transmitted to the rear wheel 4, which is the drive wheel, via a sprocket housed in a sprocket case 16 shown in Fig. 2 and a chain 13 wound around the sprocket. If the lean vehicle 1 is not an electrically assisted bicycle, the pedals 11 and the crank 12 are not essential components and can be omitted. In this case, instead of the pedals 11, a footrest is provided on which the driver can place his/her feet.

A battery 14 and a motor case 15 are provided in the area between the front wheels 3 and the rear wheel 4 in the front-rear direction, more specifically, in the area rearward of the rear ends of the front wheels 3 and forward of the front ends of the rear wheel 4.

The battery 14 stores power. The battery 14 is, for example, a combination of small cylindrical lithium ion rechargeable batteries. The battery 14 is not limited to a lithium-ion rechargeable battery, and other types of rechargeable batteries such as nickel-metal hydride batteries and lead batteries may be used. The battery 14 is not limited to a configuration in which a plurality of rechargeable batteries are combined. For example, a single rechargeable cell having a desired shape may be manufactured and used as the battery 14. The lower end of the battery 14 is located above the front axle 3x and the rear axle 4x. In other words, the center of gravity of the battery 14 is located above the front axle 3x and the rear axle 4x. The battery 14 is disposed rearward of a seat tube 32, which will be described later. The battery 14 is disposed so as to pass through the center position of the lean vehicle 1 in the vehicle width direction. It is preferable that the center of gravity of the battery 14 passes through the center position of the lean vehicle 1 in the vehicle width direction.

The battery 14 is fixed to the vehicle body frame 2 via a battery holder. By mounting the battery 14 on the battery holder, a terminal of the battery 14 is electrically connected to a conductor of the battery holder. The conductor of the battery holder is connected to the motor in the motor case 15 via electric wires or the like that pass through the inside or outside of the vehicle body frame 2. This allows power to be supplied from the battery 14 to the motor.

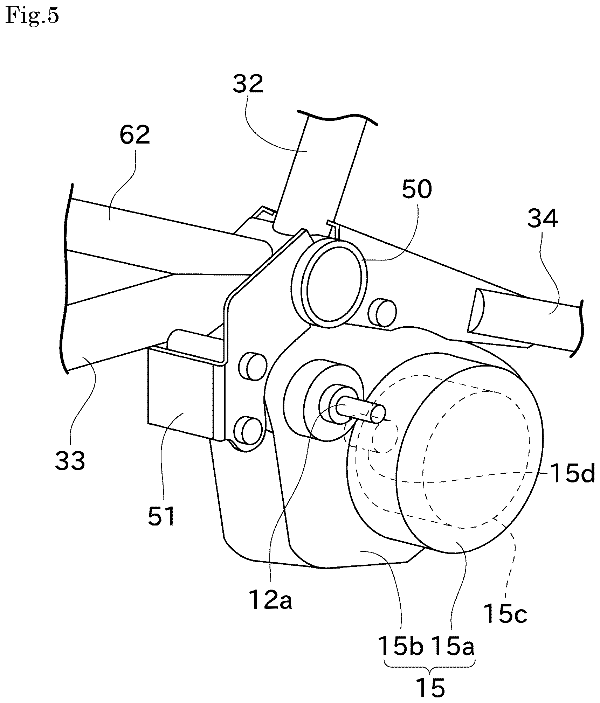

The motor case 15 is fixed to the vehicle body frame 2 using fasteners such as bolts. As shown in FIG. 5, the motor case 15 includes a first housing portion 15a and a second housing portion 15b. The first housing portion 15a and the second housing portion 15b are disposed side by side in the vehicle width direction. The first housing portion 15a houses a motor 15c. The motor 15c generates power when a driving current is supplied thereto. There are various types of motor 15c, and for example, a brushed DC motor, a brushless DC motor, an AC servo motor, etc. can be used. The power generated by the motor 15c is output from an output shaft 15d. The second housing portion 15b houses a drive transmission mechanism. The drive transmission mechanism includes gears, a belt, or the like, and transmits the power generated by the motor 15c to the crankshaft 12a. The power transmitted to the crankshaft 12a is transmitted to the rear wheel 4 via the sprocket housed in the sprocket case 16 shown in FIG. 2 and the chain 13 wound around the sprocket. This allows the rear wheel 4 to be driven using the power generated by the motor 15c.

The motor 15c is disposed between the crankshaft 12a and the rear wheel 4 in the front-rear direction. The motor 15c overlaps with an imaginary plane connecting the front axle 3x and the rear axle 4x. In other words, an upper end of the motor case 15 (an upper end of the motor 15c) is located higher than the front axle 3x and the rear axle 4x. The front axle 3x and the rear axle 4x may be disposed at the same height as the output shaft 15d of the motor 15c. The output shaft 15d is disposed below and rearward of the crankshaft 12a. The crankshaft 12a is located higher than the front axle 3x and the rear axle 4x. In this embodiment, the lower end of the motor case 15 is disposed above the lower end of the steering link member provided at the lower end of the steering shaft 6. This makes it easier to protect the motor case 15 located behind the steering shaft 6. The motor case 15 is disposed at a position overlapping the steering shaft 6 when viewed from the front. This makes it easier for the steering shaft 6 to protect the motor 15c.

As shown in FIG. 2, the sprocket case 16 is disposed on one side in the vehicle width direction (the right side in this embodiment). The motor case 15 and the drive transmission mechanism housed therein are disposed on the other side (the left side in this embodiment) of the sprocket case 16 in the vehicle width direction. The motor 15c is disposed below the front lower frame 33. As a result, the motor 15c includes a portion that overlaps with the center position of the lean vehicle 1 in the vehicle width direction. In other words, the motor 15c is located on both the right and left sides with respect to the center position of the lean vehicle 1 in the vehicle width direction. This makes it easier to move the center of gravity closer to the center of the vehicle width direction of the lean vehicle 1 than when the motor 15c, which is a heavy object, is offset to one side of the center of the vehicle width direction, thereby improving the driving stability of the lean vehicle 1.

Next, the vehicle body frame 2 will be described in detail with reference to FIG. 1 to FIG. 5. In the following, a positional relationship when the lean vehicle 1 stands upright on the horizontal surface will be described.

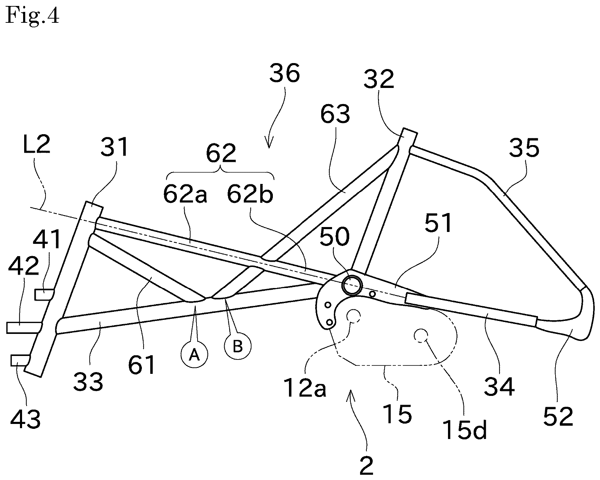

As shown in FIG. 4, the vehicle body frame 2 includes a head pipe 31, a seat tube 32, a front lower frame 33, a rear lower frame 34, a rear upper frame 35, and a reinforcing frame 36.

The head pipe 31 is positioned in a range overlapping the front wheel 3 in the front-rear direction and between the left front wheel 3a and the right front wheel 3b in the left-right direction. The steering shaft 6 is inserted into the head pipe 31. The head pipe 31 is a straight, cylindrical member. The head pipe 31 is disposed at an incline such that its upper end is located rearward of its lower end. The longitudinal direction of the head pipe 31 may be parallel to the vertical direction. The features of the head pipe 31 described above are independent of each other, and the head pipe 31 can still function even if one or more features are omitted.

An upper support shaft 41, a central support shaft 42, and a lower support shaft 43 are provided on the front end of the head pipe 31 in this order from above. The upper support shaft 41, the central support shaft 42, and the lower support shaft 43 are connected to the head pipe 31 by welding. The upper support shaft 41, the central support shaft 42, and the lower support shaft 43 may be connected to the head pipe 31 via other members. The central arm 25 of the parallel link mechanism 20 is connected to the upper support shaft 41, the central support shaft 42, and the lower support shaft 43. As a result, the head pipe 31 supports the left front wheel 3a and the right front wheel 3b via the parallel link mechanism 20. In this description, when A supports B, it is sufficient that A supports at least a part of the load of B directly or indirectly. Therefore, A and B do not need to be directly connected.

The seat tube 32 is located in an area between the front wheel 3 and the rear wheel 4 in the front-rear direction, and in an area between the left front wheel 3a and the right front wheel 3b in the left-right direction. The seat post 10 is inserted into the seat tube 32. The seat tube 32 is a straight, cylindrical member. The seat tube 32 is disposed at an angle such that its upper end is located rearward of its lower end. The longitudinal direction of the seat tube 32 may be parallel to the vertical direction. The features of the seat tube 32 described above are independent of each other, and the seat tube 32 can still function even if one or more features are omitted.

The front lower frame 33 is positioned over a range from overlapping with the front wheel 3 in the front-rear direction to between the front wheel 3 and the rear wheel 4. The front lower frame 33 is located in an area between the left front wheel 3a and the right front wheel 3b in the left-right direction. The front lower frame 33 is located in a range below the upper ends of the front wheels 3 in the up-down direction.

The front lower frame 33 supports the front wheels 3 at its front end. In detail, the front end portion of the front lower frame 33 is connected to the head pipe 31. Therefore, the front end portion of the front lower frame 33 supports the front wheel 3 via the head pipe 31 and the parallel link mechanism 20. The front end of the front lower frame 33 may be connected to a member other than the head pipe 31.

The front lower frame 33 supports the motor case 15 at its rear end. Specifically, the rear end of the front lower frame 33 is connected to a connecting portion 50 as shown in FIG. 5. The connecting portion 50 is a cylindrical member. The axial direction of the connecting portion 50 is parallel to the left-right direction. A motor frame 51 is connected to the connecting portion 50. The motor frame 51 is a frame made up of a plate-shaped member. The motor frame 51 has insertion holes formed therein into which fasteners for mounting the motor case 15 are inserted. As a result of the above, the rear end of the front lower frame 33 supports the motor case 15 via the connecting portion 50 and the motor frame 51. The rear end of the front lower frame 33 is disposed above and rearward of the crankshaft 12a. Specifically, the rear end of the front lower frame 33 and the crankshaft 12 a are aligned along a line extending downward from the seat post 10. The seat post 10 extends so as to incline forward as it extends downward. The rear end of the front lower frame 33 may be connected to a member other than the connecting portion 50. For example, the rear end of the front lower frame 33 may be connected to the motor frame 51, the seat tube 32, or the rear lower frame 34.

The front lower frame 33 is a linear, cylindrical member. The front lower frame 33 is disposed at an incline such that the rear end is higher than the front end. In other words, the front end of the front lower frame 33 is located at approximately the same height as the front axle 3x. The rear end of the front lower frame 33 is disposed at a position higher than the front axle 3x. The rear end of the front lower frame 33 is disposed at a position higher than the crankshaft 12a. The front lower frame 33 may include a bent line or a curve. In this case, it is preferable that the rear end of the front lower frame 33 is positioned higher than the front end. The front lower frame 33 may be solid, and the cross section may be other than circular. The positional relationship between the front lower frame 33 and other members will be described later. The above-described features of the front lower frame 33 are independent of each other, and the front lower frame 33 can still function even if one or more features are omitted.

The rear lower frame 34 is positioned over a range from overlapping with the rear wheel 4 in the front-rear direction to between the front wheels 3 and the rear wheel 4. The rear lower frame 34 is located in the range between the left front wheel 3a and the right front wheel 3b in the left-right direction. The rear lower frame 34 is located in a range below the upper ends of the front wheels 3 in the up-down direction.

The rear lower frame 34 supports the rear wheel 4 at its rear end. In detail, the rear end of the rear lower frame 34 is connected to the rear axle frame 52. The axle of the rear wheel 4 is attached to the rear axle frame 52. Therefore, the rear end portion of the rear lower frame 34 supports the rear wheel 4 via the rear axle frame 52. The rear end portion of the rear lower frame 34 may be connected to a member other than the rear axle frame 52.

The rear lower frame 34 supports the motor case 15 at its front end. In detail, the front end of the rear lower frame 34 is connected to the motor frame 51 as shown in FIG. 5. Therefore, the front end of the rear lower frame 34 supports the motor case 15 via the motor frame 51. The front end of the rear lower frame 34 may be connected to a member other than the motor frame 51.

The rear lower frame 34 is a linear, cylindrical member. The rear lower frame 34 is disposed at an incline such that the front end is located higher than the rear end. The rear lower frame 34 may include a bent line or a curve. In this case, it is preferable that the front end of the rear lower frame 34 is positioned higher than the rear end. In this way, since the front lower frame 33 is slanted upward at the rear and the rear lower frame 34 is slanted upward at the front, an upwardly protruding space is formed at the connection points between them. In this embodiment, the motor case 15 is disposed in this space. Therefore, the motor case 15 can be disposed at a high position. As a result, a sufficient distance can be secured between the road surface and the motor case 15. Therefore, obstacles protruding upward from the road surface are less likely to come into contact with the motor case 15.

The rear lower frame 34 may be solid and may have a cross section other than circular. The above-mentioned features of the rear lower frame 34 are independent of each other, and the rear lower frame 34 can still function even if one or more features are omitted.

The rear upper frame 35 is positioned over a range from the area overlapping with the rear wheel 4 in the front-rear direction to the area between the front wheel 3 and the rear wheel 4. The rear upper frame 35 is located in the range between the left front wheel 3a and the right front wheel 3b in the left-right direction. The rear upper frame 35 is positioned in a range from overlapping with the front wheel 3 in the up-down direction to above the front wheel 3.

The rear upper frame 35 supports the rear wheel 4 at its rear end. In detail, the rear end of the rear upper frame 35 is connected to the rear axle frame 52. The rear end of the rear upper frame 35 may be connected to a member other than the rear axle frame 52. The front end of the rear upper frame 35 is connected to the seat tube 32. However, the front end of the rear upper frame 35 may be connected to a member other than the seat tube 32. The above-mentioned features of the rear upper frame 35 are independent of each other, and the rear upper frame 35 can still function even if one or more features are omitted.

The reinforcing frame 36 is positioned over a range from the area overlapping with the front wheel 3 to the area between the front wheel 3 and the rear wheel 4 in the front-rear direction. From another perspective, the reinforcing frame 36 is located in the range between the head pipe 31 and the seat tube 32 in the front-rear direction. The reinforcing frame 36 is positioned in the range between the left front wheel 3a and the right front wheel 3b in the left-right direction.

The reinforcing frame 36 is provided to ensure the rigidity required for the vehicle body frame 2. The reinforcing frame 36 has a number of frame components. As a result, the vehicle body frame 2 has a structure having a plurality of triangles, which increases the rigidity. The frame components are all straight and cylindrical. However, the frame components may include bends or curves. The frame components may be solid. The cross-sectional diameter of the frame components is smaller than the cross-sectional diameter of the front lower frame 33. However, the cross-sectional diameter of the frame components may be the same as or larger than the cross-sectional diameter of the front lower frame 33.

The reinforcing frame 36 has, as frame components, a handle-side reinforcing frame 61, an extension reinforcing frame 62, and a seat-side reinforcing frame 63. The frame components of the reinforcing frame 36 in this embodiment are merely examples, and at least one of the frame components may be omitted. Frame components different from those in this embodiment may be provided. For example, a frame that directly connects the head pipe 31 and the seat tube 32 may be provided. The features of the frame components described below are independent of each other, and the frame components can still function even if one or more features are omitted.

A front end of the handle-side reinforcing frame 61 is connected to the head pipe 31. The rear end of the handle-side reinforcing frame 61 is connected to the front lower frame 33. The rear end of the handle-side reinforcing frame 61 is located lower than the front end. By providing the handle-side reinforcing frame 61, the area of the vehicle body frame 2 between the head pipe 31 and the seat tube 32 can be reinforced.

The front end of the extension reinforcing frame 62 is connected to the head pipe 31. The rear end of the extension reinforcing frame 62 is connected to the connecting portion 50. The rear end of the extension reinforcing frame 62 may be connected to something other than the connecting portion 50. The extension reinforcing frame 62 has a rear end located lower than a front end. In detail, the extension reinforcing frame 62 is disposed along an imaginary line L2 that extends from the rear lower frame 34 in the longitudinal direction. Being arranged along the imaginary line L2 means that at least a portion of the extension reinforcing frame 62 (e.g., half of the longitudinal direction) overlaps with the imaginary line L2, but does not have to exactly match. By providing the extension reinforcing frame 62, the area of the vehicle body frame 2 between the head pipe 31 and the seat tube 32 can be reinforced.

From another perspective, the extension reinforcing frame 62 has an upper reinforcing frame 62a and an auxiliary frame 62b. A front end of the upper reinforcing frame 62 a is connected to the head pipe 31. The rear end of the upper reinforcing frame 62 a is connected to the seat side reinforcing frame 63. The rear end of the upper reinforcing frame 62a is located lower than the front end. The front end of the auxiliary frame 62b is connected to the seat side reinforcing frame 63. The rear end of the auxiliary frame 62b is connected to the connecting portion 50. The rear end of the auxiliary frame 62b may be connected to something other than the connecting portion 50. The rear end of the auxiliary frame 62b is located lower than the front end. As described, the connecting portion 50 is connected to the frame (specifically, the seat tube 32, the front lower frame 33, and the extension reinforcing frame 62) at multiple positions spaced apart in the circumferential direction of the crankshaft 12a.

The front end of the seat-side reinforcing frame 63 is connected to the front lower frame 33. The rear end of the seat-side reinforcing frame 63 is connected to the seat tube 32. The seat-side reinforcing frame 63 has an inclined or curved shape so that the front end is lower than the rear end. By providing the seat-side reinforcing frame 63, the area of the vehicle body frame 2 between the head pipe 31 and the seat tube 32 can be reinforced.

The lean vehicle 1 of this embodiment is not provided with a frame that directly connects the head pipe 31 and the seat tube 32. Therefore, the driver straddles the seat-side reinforcing frame 63 when getting in and out of the vehicle. Since the seat-side reinforcing frame 63 in this embodiment slopes downwards towards the front, the height of the seat side reinforcing frame 63 can be made lower in the area in front of the seat tube 32. Therefore, the driver can easily straddle the seat side reinforcing frame 63, making it easier for the driver to get in and out of the vehicle.

In this embodiment, the extension reinforcing frame 62 and the seat-side reinforcing frame 63 intersect and are connected to each other. In this manner, by crossing and connecting the frame components of the reinforcing frame 36, the rigidity can be efficiently improved.

In this paragraph, the connection point between the handle-side reinforcing frame 61 and the front lower frame 33 is referred to as "connection point A," and the connection point between the seat side reinforcing frame 63 and the front lower frame 33 is referred to as "connection point B." The connection points A and B are located rearward of the rear end of the front wheel 3. The connection point A is located forward of connection point B. The connection point A and the connection point B are adjacent to each other. More specifically, the connection points A and B are located in a central area when the front lower frame 33 is divided into thirds in the longitudinal direction. From another perspective, the axis of the handle-side reinforcing frame 61 and the axis of the seat-side reinforcing frame 63 intersect on the front lower frame 33. The connection point A and the connection point B may be separated from each other. In the front-rear direction, the connection point between the extension reinforcing frame 62 (upper reinforcing frame 62a) and the seat-side reinforcing frame 63 is rearward of connection point A and rearward of connection point B.

Next, the positional relationships between the members constituting the lean vehicle 1 will be described in more detail. The positional relationships described below are independent of each other, and even if only one of the positional relationships is extracted, the corresponding effect can be achieved.

The front end of the front lower frame 33 is connected to a portion of the head pipe 31 below the upper support shaft 41 and above the central support shaft 42. More specifically, the front end of the front lower frame 33 is connected to a region of the head pipe 31 that overlaps with the central support shaft 42 in the height direction. The height of the front end of the front lower frame 33 is lower than the height of the upper end of the motor case 15. As described, because the height of the front end of the front lower frame 33 is relatively low, when the front lower frame 33 is disposed horizontally, the distance between the road surface and the motor case 15 tends to be short. In other words, the effect of positioning the motor case 15 at a high position by raising the front lower frame 33 toward the rear can be effectively utilized. The height of the front end of the front lower frame 33 is the same as the height of the rear end of the rear lower frame 34. The height of the front end of the front lower frame 33 is higher than the height of the lower end of the motor case 15.

The rear end of the front lower frame 33 is located higher than the lower end of the motor case 15. Specifically, the rear end of the front lower frame 33 is located higher than the center of the motor case 15 in the height direction or the center of gravity. This makes it clear that the motor case 15 is disposed in the upwardly convex space formed by the front lower frame 33 and the rear lower frame 34. The rear end of the front lower frame 33 is located higher than the central support shaft 42. This makes the degree of rearward rise of the front lower frame 33 clear.

At least a portion of the motor case 15 is located on a line connecting the axles of the front wheel 3 and the rear wheel 4 in a side view. In this embodiment, the height of the axle of the front wheel 3 and the height of the axle of the rear wheels 4 are the same. The output shaft 15d of the motor 15c is disposed at a position higher than the height of the axles of the front wheels 3 and the rear wheel 4. The lower end of the motor 15c is disposed at a position lower than the height of the axles of the front wheel 3 and the rear wheel 4.

The motor case 15 is fixed below the front lower frame 33. This makes it possible to prevent interference between the front lower frame 33 and the motor case 15, and allows the center of gravity of the motor 15c to be closer to the center position of the lean vehicle 1 in the vehicle width direction. By disposing the motor case 15 below the front lower frame 33, a lower center of gravity of the lean vehicle 1 can be easily achieved.

The sprocket housed in the sprocket case 16 described above is disposed offset to one side in the vehicle width direction with respect to the front lower frame 33. In this embodiment, a portion of the chain 13 that is wound around the sprocket is disposed above the front lower frame 33. This makes it possible to reduce the reduction ratio of the power output from the crankshaft 12a. In other words, even if the diameter of the rear wheel 4 is small, the distance that can be traveled per one rotation of the crankshaft 12a can be increased.

The crankshaft 12a is located higher than the front end of the front lower frame 33. This allows the crankshaft 12a to be positioned higher, making it less likely that the pedal 11 will come into contact with the road surface when leaning. More specifically, the crankshaft 12a is located higher than the front end of the front lower frame 33 and below the front lower frame 33 in a side view. In other words, the crankshaft 12a is disposed in a space formed by raising toward rearward the front lower frame 33 rearward.

As described above, the seat tube 32, the front lower frame 33, and the extension reinforcing frame 62 are connected to the connecting portion 50. At least one of the locations (the insertion holes described above) where the motor case 15 is attached to the motor frame 51 is located below the connecting portion 50. This makes it difficult for the load generated in the frame to be transmitted to the motor 15c.

In this embodiment, the front lower frame 33 fixes the front end of the motor case 15 via a motor frame 51. Specifically, the front lower frame 33 fixes the motor frame 51 via motor case 15 with bolts at two positions, one above and one below the crankshaft 12a, in front of the crankshaft 12a. The motor frames 51 extend downward from both sides in the vehicle width direction of the rear end portion of the front lower frame 33. The motor frame 51 is configured to sandwich and fix both sides of the motor case 15 in the vehicle width direction, so that the periphery of the crankshaft 12a can be firmly fixed. The rear lower frame 34 fixes the front end of the motor case 15 via a motor frame 51. Specifically, the motor case 15 is fixed to the rear lower frame 34 with bolts at a position rearward of the crankshaft 12a and above the crankshaft 12a. In this manner, the motor case 15 is firmly fixed to the vehicle body frame 2 by the fasteners arranged at a plurality of positions in the circumferential direction of the crankshaft 12a.

The rear lower frame 34 is configured so as to support the battery 14 above the portion where the motor case 15 is fixed. This allows the battery 14 and the motor 15c to be located closer to the rear lower frame 34, and the power harness that supplies power from the battery 14 to the motor 15c can be shortened.

(Feature 1) As described above, the lean vehicle 1 of this embodiment includes the front wheel 3, the rear wheel 4, the motor 15c, and the front lower frame 33. The motor 15c is disposed behind the front wheel 3 and in front of the rear wheel 4, and generates power for running. The front lower frame 33 supports the front wheel 3 at front end thereof and the motor 15c at rear end thereof, with the rear end positioned higher than the front end and the rear end positioned higher than the lower end of the motor 15c.

Since the rear end of the front lower frame 33 is located higher than the front end, the motor 15c can be disposed in a correspondingly higher position. As a result, a sufficient distance can be secured between the road surface and the motor 15c. Therefore, obstacles protruding upward from the road surface are less likely to come into contact with the motor 15c.

(Feature 2) The lean vehicle 1 of this embodiment has the left front wheel 3a and the right front wheel 3b as the front wheels 3. The portion of the front lower frame 33 is disposed in the area between the left front wheel 3a and the right front wheel 3b in the left-right direction. The front lower frame 33 is disposed in a range below the upper ends of the front wheels 3 in a side view.

Since the front lower frame 33 is disposed in the range between the left front wheel 3a and the right front wheel 3b, the shape of the front lower frame 33 extending from the front wheel 3 toward the motor 15c can be simplified. Since the front lower frame 33 is disposed in the range below the upper ends of the front wheels 3, the motor 15c can be disposed in a low position. As a result, the center of gravity of the lean vehicle 1 can be lowered.

(Feature 3) The lean vehicle 1 of this embodiment includes the rear lower frame 34 that supports the rear wheel 4 at the rear end thereof, supports the motor 15c at the front end thereof. The front end of the rear lower frame 34 is positioned higher than rear end thereof, and the front end of the rear lower frame 34 is positioned higher than the lower end of the motor 15c.

Since the front lower frame 33 is raised toward the rear and the rear lower frame 34 is raised toward the front, the upwardly protruding space can be formed at the connection position of these two frames. By locating the motor 15c in this space, the front and rear axle positions can be lowered while ensuring a sufficient distance from the road surface to the motor 15c.

(Feature 4) The lean vehicle 1 of the this embodiment includes the head pipe 31 and the extension reinforcing frame 62. The steering shaft 6 connected to the steering handle 5 is inserted into the head pipe 31, and the front end of the front lower frame 33 is connected thereto. The extension reinforcing frame 62 is disposed along the imaginary line L2 that is the extension of the rear lower frame 34 in the longitudinal direction, and the front end portion of the extension reinforcing frame 62 is connected to the head pipe 31.

The extension reinforcing frame 62 ensures sufficient rigidity of the vehicle body frame 2.

(Feature 5) The lean vehicle 1 of the this embodiment includes the seat tube 32 and the seat-side reinforcing frame 63. The seat post 10 connected to the seat 9 on which the driver sits is inserted into the seat tube 32. The seat-side reinforcing frame 63 connects at the front end thereof to the front lower frame 33 and at the rear end thereof to the seat tube 32, inclining or curving downward towards the front.

The seat tube 32 and the front lower frame 33 are connected by the seat-side reinforcing frame 63, which increases the rigidity of the entire frame and suppresses deformation of each frame. Since the seat-side reinforcing frame 63 slopes downward towards the front, the height of the seat-side reinforcing frame 63 can be made lower in the area in front of the seat tube 32. Therefore, even in a configuration in which the front lower frame 33 slopes upward toward the rear, the driver can easily straddle the vehicle, making it easy for the driver to get in and out of the vehicle.

(Feature 6) In the lean vehicle 1 of this embodiment, the seat-side reinforcing frame 63 is connected to the front lower frame 33 in a range rearward of the rear ends of the front wheels 3 in a side view.

By connecting the seat-side reinforcing frame 63 to the front lower frame 33 at a relatively rear position, the height of the seat-side reinforcing frame 63 in the area in front of the seat tube 32 can be further reduced.

(Feature 7) The lean vehicle 1 of this embodiment includes the head pipe 31 and the handle-side reinforcing frame 61. The steering shaft 6 connected to the steering handle 5 is inserted into the head pipe 31, and the front end of the front lower frame 33 is connected thereto. The handle-side reinforcing frame 61 connects to the head pipe 31 at the front end thereof and the front lower frame 33 at the rear end thereof, with the rear end being positioned lower than the front end. The connection point A between the handle-side reinforcing frame 61 and the front lower frame 33 and the connection point B between the seat-side reinforcing frame 63 and the front lower frame 33 are close to each other (more specifically, both connection points A and B are located in the central range when the front lower frame 33 is divided into thirds in the longitudinal direction).

The handle-side reinforcing frame 61 can reinforce the area where the reinforcement by the seat-side reinforcing frame 63 is insufficient. This makes it possible to suppress deformation of each frame while also allowing the driver to easily get on and off the vehicle.

(Feature 8) The lean vehicle 1 of this embodiment includes the head pipe 31 and the upper reinforcing frame 62a. The steering shaft 6 to which the steering handle 5 is connected is inserted into the head pipe 31, and the front end of the front lower frame 33 is connected thereto. The upper reinforcing frame 62a connects to the head pipe 31 at the front end thereof and seat-side reinforcing frame 63 at the rear end thereof, with the rear end being located lower than the front end. The upper reinforcing frame 62a is connected to the seat-side reinforcing frame 63 rearward of the connection point A between the seat-side reinforcing frame 63 and the front lower frame 33.

By providing the upper reinforcing frame 62a, sufficient rigidity can be ensured in the vicinity of the connection point between the seat-side reinforcing frame 63 and the front lower frame 33.

(Feature 9) The lean vehicle 1 of this embodiment includes the left front wheel 3a and the right front wheel 3b as the front wheels. The lean vehicle 1 includes the parallel link mechanism 20 that is disposed between the left front wheel 3a and the right front wheel 3b and includes the arm that inclines together with the left front wheel 3a and the right front wheel 3b when leaning. The front lower frame 33 supports the front wheels 3 at its front end via the parallel link mechanism 20. The motor 15c is disposed in the range between the left front wheel 3a and the right front wheel 3b in the vehicle width direction.

This allows the motor 15c to be disposed closer to the center of the lean vehicle 1, thereby improving the stability of the vehicle's running.

(Feature 10) The lean vehicle 1 of this embodiment includes the left front wheel 3a, the right front wheel 3b, the rear wheel 4, the front lower frame 33, the parallel link mechanism 20, the seat tube 32, and the seat-side reinforcing frame 63. The front lower frame 33 supports the left front wheel 3a and the right front wheel 3b at the front end thereof. The parallel link mechanism 20 is disposed between the left front wheel 3a and the right front wheel 3b, and includes the arm that inclines together with the left front wheel 3a and the right front wheel 3b when leaning. The seat post 10 connected to the seat 9 on which the driver sits is inserted into the seat tube 32. The seat-side reinforcing frame 63 connects at the front end thereof to the front lower frame 33 and at the rear end thereof to the seat tube 32, inclining or curving downward towards the front.

Since the seat-side reinforcing frame 63 slopes downward towards the front, the height of the seat-side reinforcing frame 63 can be made lower in the area in front of the seat tube 32. This makes it easier for the driver to straddle the vehicle, making it easier for them to get in and out.

Although the preferred embodiment of the present application has been described above, the above configuration can be modified, for example, as follows. A single modification may be made, or multiple modifications may be made in any combination.

The positions and shapes of the components and the relative positions of the components are merely examples and can be changed.

For example, the seat tube 32, the front lower frame 33, and the extension reinforcing frame 62 are connected to the connecting portion 50. Instead, only two of the three frames may be connected to the connecting portion 50. Alternatively, the rear lower frame 34 may also be connected to the connecting portion 50.

Instead, the connecting portion 50 may be omitted, and the seat tube 32, the front lower frame 33, and the extension reinforcing frame 62 may be connected to the motor frame 51. The rear end of the extension reinforcing frame 62 may be connected only to the front lower frame 33.

The shape of the front lower frame 33 is merely an example, and the front lower frame 33 may be disposed along the horizontal direction.

The mounting position and the mounting orientation of the battery 14 are not limited to those shown in the above embodiment. For example, the battery 14 may be disposed so that the longitudinal direction of the battery 14 is approximately parallel to the longitudinal direction of the front lower frame 33. The battery 14 may also be structured to be housed within the vehicle body frame 2. The battery 14 may also be housed within the motor case 15.

The transmission body that transmits the power from the crankshaft 12a to the rear wheel 4 is not limited to the chain 13, but may be a belt. The lean vehicle 1 may or may not be provided with a transmission structure that switches the reduction ratio before transmitting the power output to the crankshaft 12a to the rear wheel 4.

## Claims

1. A lean vehicle (1) comprising:
a front wheel (3);
a rear wheel (4);
a motor (15c) that is disposed rearward of the front wheel (3) and forward of the rear wheel (4) and that generates power for traveling; and
a front lower frame (33) having a front end portion supporting the front wheel (3) and a rear end portion supporting the motor (15c), the rear end portion being positioned higher than the front end portion and higher than a lower end portion of the motor (15c).

2. The lean vehicle (1) according to claim 1, further comprising
a left front wheel (3a) and a right front wheel (3b) as the front wheels (3), wherein
a portion of the front lower frame (33) is disposed in a range between the left front wheel (3a) and the right front wheel (3b) in a left-right direction, and
the front lower frame (33) is disposed in a range below upper ends of the front wheels in a side view.

3. The lean vehicle (1) according to claim 1 or 2, further comprising
a rear lower frame having a rear end portion supporting the rear wheel (4) and a front end portion supporting the motor (15c), the front end being positioned higher than the rear end and the front end being positioned higher than a lower end of the motor (15c).

4. The lean vehicle (1) according to claim 3, further comprising
a head pipe into which a steering shaft to which a steering handle is connected is inserted and to which the front end portion of the front lower frame (33) is connected, and
an extension reinforcing frame disposed along an imaginary line extending from the rear lower frame in a longitudinal direction and having a front end connected to the head pipe.

5. The lean vehicle (1) according to any one of claims 1 to 4, further comprising
a seat tube (32) into which a seat post (10) connected to a seat (9) on which a driver sits is inserted, and
a seat-side reinforcing frame (63) having a front end connected to the front lower frame (33) and a rear end connected to the seat tube (32), the seat side reinforcing frame (63) being inclined or curved so that the front end is lower than the rear end.

6. The lean vehicle (1) according to claim 5, wherein
the seat-side reinforcing frame (63) is connected to the front lower frame (33) in a range rearward of a rear end of the front wheel in a side view.

7. The lean vehicle (1) according to claim 6, further comprising
a head pipe into which a steering shaft to which a steering handle is connected is inserted and to which the front end portion of the front lower frame (33) is connected, and
a handle-side reinforcing frame having a front end connected to the head pipe and a rear end connected to the front lower frame (33), the rear end being positioned lower than the front end, wherein
a connection portion between the handle-side reinforcing frame and the front lower frame (33) and a connecting portion between the seat-side reinforcing frame (63) and the front lower frame (33) are close to each other.

8. The lean vehicle (1) according to any one of claims 5 to 7, further comprising
a head pipe into which a steering shaft to which a steering handle is connected is inserted and to which the front end portion of the front lower frame (33) is connected, and
an upper reinforcing frame having a front end connected to the head pipe and a rear end connected to the seat-side reinforcing frame (63), the rear end being positioned lower than the front end, wherein
the upper reinforcing frame is connected to the seat-side reinforcing frame (63) rearward of a connecting portion between the seat-side reinforcing frame (63) and the front lower frame (33).

9. The lean vehicle (1) according to any one of claims 1 to 8, further comprising
a left front wheel (3a) and a right front wheel (3b) as the front wheels, and
a parallel link mechanism including an arm that is disposed between the left front wheel (3a) and the right front wheel (3b) and that inclines together with the left front wheel (3a) and the right front wheel (3b) when leaning, wherein
the front lower frame (33) supports the front wheel at a front end portion via the parallel link mechanism, and
the motor (15c) is disposed in a range between the left front wheel (3a) and the right front wheel (3b) in the vehicle width direction.

10. A lean vehicle (1) comprising:
a left front wheel (3a);
a right front wheel (3b);
a rear wheel (4);
a front lower frame (33) having a front end portion supporting the left front wheel (3a) and the right front wheel (3b);
a parallel link mechanism (20) including an arm that is disposed between the left front wheel (3a) and the right front wheel (3b) and that inclines together with the left front wheel (3a) and the right front wheel (3b) when leaning,
a seat tube (32) into which a seat post (10) connected to a seat (9) on which a driver sits is inserted, and
a seat-side reinforcing frame (63) having a front end connected to the front lower frame (33) and a rear end connected to the seat tube (32), the seat side reinforcing frame (63) being inclined or curved so that the front end is lower than the rear end.
